# EUROPEAN PATENT APPLICATION

(11) **EP 3 238 532 A1**
(43) Date of publication of application: **01.11.2017**
(21) Application number: 15872160.5
(22) Date of filing: 01.12.2015
(51) Int. Cl.: A01G 31/00, A01G 7/06

(54) **HYDROPONIC DEVICE**

(30) Priority: 24.12.2014 JP 2014260606
(71) Applicant: Panasonic Intellectual Property Management Co., Ltd., Osaka-shi, Osaka 540-6207 (JP)
(72) Inventor: YANO, Hiroshi, Osaka-shi, Osaka 540-6207 (JP); JEONG, WooHyeun, Osaka-shi, Osaka 540-6207 (JP)
(74) Representative: Müller-Boré & Partner Patentanwälte PartG mbB
(86) International application number: PCT/JP2015/005959
(87) International publication number: WO 2016/103583

(57) **Abstract**

A hydroponic apparatus (100) includes: a soil surface section (12) including a through-hole (12a) through which to insert a plant (10), and separating a subterranean space (11a) where a subterranean part (10b) of the plant (10) grows and an aerial space (1121) where an aerial part (10d of the plant (10) grows; a growing tank (11), together with the soil surface section (12), forming the subterranean space (11a), where the subterranean part (10b) is placed; germination enhancer supplying units (1000, 2000) supplying a germination enhancer (3), reserved in a germination enhancer reservoir (30), to at least one of the aerial parts (10d, 20d) and the subterranean parts (10b, 20b); and a control unit (40) controlling a mode in which the germination enhancer supplying units (1000, 2000) supply the germination enhancer (3) to the plants (10, 20).

## Description

### TECHNICAL FIELD

The present invention relates to a hydroponic apparatus configured to grow a plant using no soil.

### BACKGROUND ART

Development of so-called hydroponic apparatuses for growing plants without soil and with roots of the plants soaked in water has been underway. In hydroponics, perennials which live for more than two years are grown as well. In the case of growing perennials, particularly herbaceous perennials whose aerial parts die in seasons not suitable for their growth, it is usually required that a dormancy-breaking process be performed on the herbaceous perennials. For this reason, techniques of performing the dormancy-breaking process using a germination enhancer such as gibberellins have been put into practice. One example of the techniques is disclosed in Patent Literature 1.

### CITATION LIST

### PATENT LITERATURE

Patent Literature 1: Japanese Unexamined Patent Application Publication No. Hei 2-124045

### SUMMARY OF INVENTION

The above-mentioned Patent Literature 1 discloses no specific configuration for supplying a germination enhancer to a dormant plant inside a hydroponic apparatus. Thus, the technique of breaking the dormancy of a perennial plant inside the hydroponic apparatus has not been established yet. Accordingly, there has been a demand for a technique of breaking the dormancy of a perennial plant and growing the plant in the same hydroponic apparatus without interruption.

The present invention has been made in view of such conventional problems. It is an object of the present invention to provide a hydroponic apparatus capable of breaking the dormancy of a plant and growing the plant without interruption.

A hydroponic apparatus according to a first aspect of the present invention includes: a soil surface section including a through-hole through which to insert a plant, and separating a subterranean space where a subterranean part of the plant grows and an aerial space where an aerial part of the plant grows; a growing tank, together with the soil surface section, forming the subterranean space, where the subterranean part is placed; a germination enhancer supplying unit configured to supply a germination enhancer, reserved in a germination enhancer reservoir, to at least one of the aerial part and the subterranean part; and a control unit configured to control a mode in which the germination enhancer supplying unit supplies the germination enhancer to the plant.

A hydroponic apparatus according to a second aspect of the present invention includes: a soil surface section including a through-hole through which to insert a plant, and separating a subterranean space where a subterranean part of the plant grows and an aerial space where an aerial part of the plant grows; a growing tank, together with the soil surface section, forming the subterranean space, where the subterranean part is placed; a nutrient solution or water reservoir configured to reserve a nutrient solution or water for enhancing growth of the plant; a germination enhancer mixing unit configured to mix a germination enhancer, reserved in a germination enhancer reservoir, into the nutrient solution or water; a nutrient solution or water supplying unit configured to supply the nutrient solution or water including the germination enhancer to the subterranean part; and a control unit configured to control a mode in which the germination enhancer mixing unit mixes the germination enhancer into the nutrient solution or water as well as a mode in which the nutrient solution or water supplying unit supplies the nutrient solution or water including the germination enhancer to the subterranean part.

The present invention makes it possible for the hydroponic apparatus to break the dormancy of a plant and grow the plant without interruption.

### BRIEF DESCRIPTION OF DRAWINGS

[Fig. 1] Fig. 1 is a diagram for describing an overall configuration of a hydroponic apparatus of Embodiment 1 of the present invention.
[Fig. 2] Fig. 2 is a diagram for describing an overall configuration of a modification of the hydroponic apparatus of Embodiment 1 of the present invention.
[Fig. 3] Fig. 3 is a flowchart for a germination enhancer supplying process 1 to be performed by a control unit of the hydroponic apparatus of Embodiment 1 of the present invention.
[Fig. 4] Fig. 4 is a diagram for describing an overall configuration of a hydroponic apparatus of Embodiment 2 of the present invention.
[Fig. 5] Fig. 5 is a flowchart for a germination enhancer supplying process 2 to be performed by a control unit of the hydroponic apparatus of Embodiment 2 of the present invention.

### DESCRIPTION OF EMBODIMENTS

Referring to the drawings, descriptions will be hereinbelow provided for hydroponic apparatuses of embodiments of the present invention.

The hydroponic apparatuses of the embodiments are used for plants whose aerial parts wither in a season unsuitable for plant growth. A plant to be grown by the hydroponic apparatuses of the embodiments is a perennial plant whose aerial part withers during dormancy periods, and is grown after its germination during growth periods. In the embodiments, an example of the perennial plant is Panax ginseng (Korean ginseng, Asian ginseng). Hydroponic methods of the respective embodiments to be discussed hereinbelow are those for hydroponically growing Panax ginseng.

In each embodiment, a germination enhancer is gibberellins, for example. Each embodiment controls at least one of an amount of germination enhancer to be supplied, an interval at which to supply the germination enhancer, and a length of time for which to supply the germination enhancer. Thereby, each embodiment can enhance simultaneity with which plants germinate. Specific examples of Embodiments 1 and 2 will be described hereinbelow.

### (Embodiment 1)

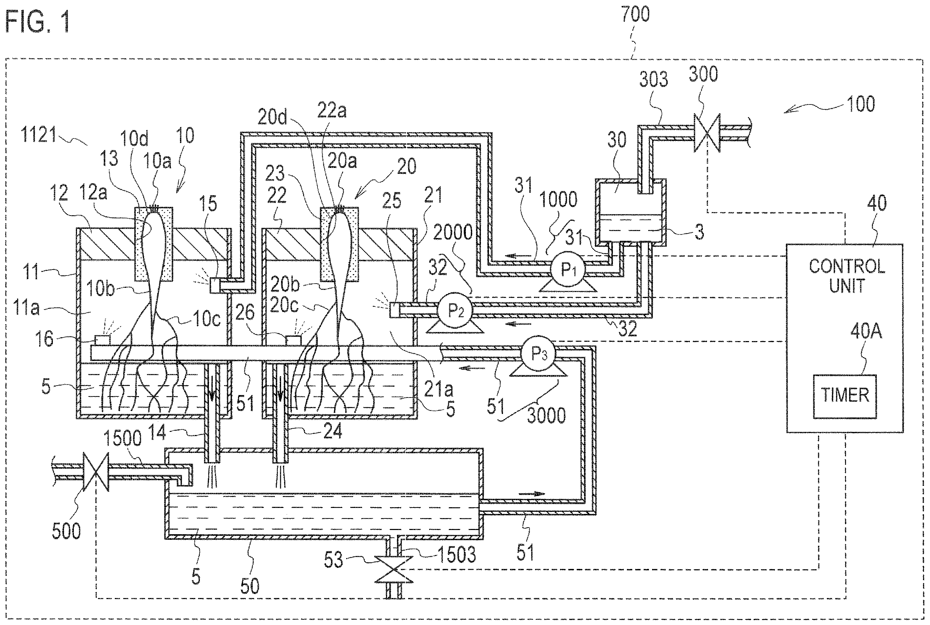

Using Figs. 1 to 3, descriptions will be provided for the hydroponic apparatus of Embodiment 1.

As shown in Fig. 1, the hydroponic apparatus 100 of the embodiment is set up in a housing 700 shaped like a container, and having a door through which an operator can get into and out of the housing 700. Albeit illustrated, the inside of the housing 700 is equipped with lighting devices and an air conditioner. Thereby, the lit and air-conditioned environment inside the housing 700 is controlled to be suitable to hydroponically grow plants.

As for its basic configuration, as shown in Fig. 1, the hydroponic apparatus 100 of the embodiment includes soil surface sections 12, 22, media 13, 23, growing tanks 11, 21, germination enhancer supplying units 1000, 2000, and a control unit 40. The embodiment shows an example where plants 10, 20 are grown in the growing tanks 11, 21, respectively. However, two or more plants may be grown in each of the growing tanks 11, 21.

The soil surface sections 12, 22 include through-holes 12a, 22a through which to insert the plants 10, 20. In a plan view, both of the through-holes 12a, 22a are circular. The soil surface sections 12, 22 separate subterranean spaces 11 a, 21 a where subterranean parts 10b, 20b of the plants 10, 20 grow, and an aerial space 1121 where aerial parts 10d, 20d of the plants 10, 20 grow. The aerial space 1121 is a space inside the housing 700, but outside the growing tanks 11, 21. The subterranean space 11 a is a space surrounded with the growing tank 11 and the soil surface section 12, while the subterranean space 21 a is a space surrounded with the growing tank 21 and the soil surface section 22. The subterranean spaces 11a, 21 a are substantially closed spaces.

The media 13, 23 are made from a flexible material having a water-holding property, such as urethane foam, or a sponge. Thus, the media 13, 23 are capable of containing a nutrient solution or water 5. The media 13, 23 are capable of further containing the germination enhancer. The media 13, 23 are provided between the plants 10, 20 and the through-holes 12a, 22a, and in a plan view, surround the plants 10, 20. The media 13, 23 are substantially cylindrical. The media 13, 23 touch the subterranean parts 10b, 20b and the aerial parts 10d, 20d of the plants 10, 20. Thereby, the subterranean parts 10b, 20b and the aerial parts 10d, 20d of the plants 10, 20 are kept moistened. Such subterranean parts 10b, 20b are consequently prevented from being cracked due to a dry condition.

The media 13, 23 are configured to surround the outer peripheries of germination parts 10a, 20a of the plants 10, 20, and to help the germination enhancer 3, permeated into the media 13, 23, to attach to the germination parts 10a, 20a of the plants 10, 20. Thereby, the germination enhancer 3 can be made to directly touch the germination parts 10a, 20a of the plants 10, 20. Thus, the germination enhancing effect can be exerted more securely.

The growing tanks 11, 21, together with the soil surface sections 12, 22, form subterranean spaces 11a, 21 a in a way that the subterranean parts 10b, 20b of the plants 10, 20, inserted through the through-holes 12a, 22a with the media 13, 23 interposed therebetween, are placed inside subterranean spaces 11 a, 21 a. The growing tanks 11, 21 reserve the nutrient solution or water 5. In the growing tanks 11, 21, roots 10c, 20c of the plants 10, 20 are immersed in the nutrient solution or water 5. The growing tanks 11, 21 include drainpipes 14, 24 for draining the nutrient solution or water 5 from the growing tanks 11, 21 to a nutrient solution or water reservoir 50 when the height of the nutrient solution or water 5 inside the growing tanks 11, 21 exceeds a predetermined height.

Germination enhancer supplying units 1000, 2000 supply the germination enhancer 3 reserved in a germination enhancer reservoir 30 to the plants 10, 20, respectively.

The germination enhancer supplying unit 1000 includes a pipe 31, and a pump P1 connected to the pipe 31. One end of the pipe 31 is connected to the growing tank 11, while the other end of the pipe 32 is connected to the germination enhancer reservoir 30. While the pump P1 is in operation, the germination enhancer 3 is supplied from the germination enhancer reservoir 30 to the growing tank 11 through the pipe 31. In the growing tank 11, the germination enhancer 3 is discharged from a discharge port 15, provided to a distal end of the pipe 31, to the subterranean part 10b of the plant 10.

The germination enhancer supplying unit 2000 includes a pipe 32, and a pump P2 connected to the pipe 32. One end of the pipe 32 is connected to the growing tank 21, while the other end of the pipe 32 is connected to the germination enhancer reservoir 30. While the pump P2 is in operation, the germination enhancer 3 is supplied from the germination enhancer reservoir 30 to the growing tank 21 through the pipe 32. In the growing tank 21, the germination enhancer 3 is discharged from a discharge port 25, provided to a distal end of the pipe 32, to the subterranean part 20b of the plant 20.

The control unit 40 sends a control signal to the pumps P1, P2. Thereby, the control unit 40 controls modes in which the germination enhancer supplying units 1000, 2000 supply the germination enhancer 3 to the plants 10, 20. Thus, the control unit 40 is capable of controlling the modes of supplying the germination enhancer 3 for germinating the plants 10, 20 as lying dormant inside the hydroponic apparatus 100 to the plants 10, 20.

To put it specifically, the control unit 40 is capable of controlling modes in which to supply the germination enhancer 3 to the plants 10, 20, such as the timing at which to supply the germination enhancer 3, the length of time for which to supply the germination enhancer 3, the interval at which to supply the germination enhancer 3, and the amount of germination enhancer 3 to be supplied. Accordingly, the control unit 40 is capable of breaking the dormancy of the plants 10, 20 and growing the plants 10, 20 in the same hydroponic apparatus 100. Furthermore, in the case where the multiple plants 10, 20 are hydroponically grown, the timing at which to germinate the plurality of plants 10, 20 can be nearly synchronized by the control unit 40.

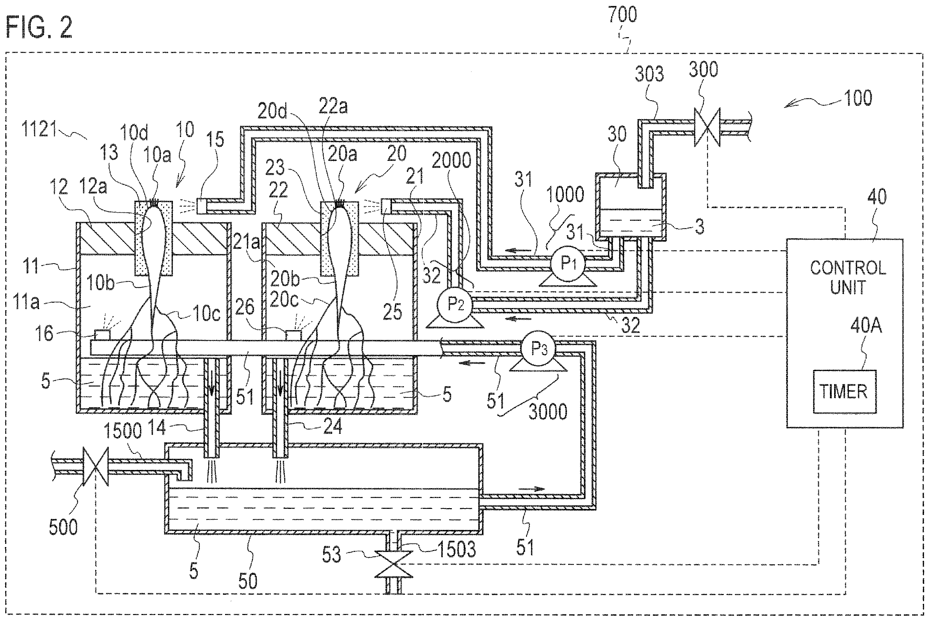

In the embodiment, the germination enhancer supplying units 1000, 2000 are illustrated as supplying the germination enhancer 3 to the subterranean parts 10b, 20b of the plants 10, 20. However, the germination enhancer supplying units 1000, 2000 may be configured to supply the germination enhancer 3 to the aerial parts 10d, 20d of the plants 10, 20 as illustrated in Fig. 2. The supply of the germination enhancer 3 to the aerial parts 10d, 20d of the plants 10, 20 may be achieved by using open/close valves instead of the pumps P1, P2, respectively. In this case, the germination enhancer 3 is supplied from the germination enhancer reservoir 30 to the germination parts 10a, 20a by opening the open/close valves.

The germination enhancer reservoir 30 of the embodiment is fixed to the germination enhancer supplying units 1000, 2000. However, the germination enhancer reservoir 30 may have a structure for enabling the germination enhancer reservoir 30 to be attached to and detached from the germination enhancer supplying units 1000, 2000.

The control unit 40 controls the germination enhancer supplying units 1000, 2000 such that the total amount of the germination enhancer 3 to be supplied to the plants 10, 20 becomes equal to a predetermined amount. Thus, the control unit 40 is capable of supplying the germination enhancer 3 to the subterranean parts 10b, 20b in amounts suitable to germinate the plants 10, 20. Accordingly, the control unit 40 is capable of supplying the germination enhancer 3 to the subterranean parts 10b, 20b in such a way as to prevent unproductive growth of the aerial parts 10d, 20d while enhancing the germination.

A specific method for achieving this control may be that the control unit 40 controls the germination enhancer supplying units 1000, 2000 such that the total amount of the supplied germination enhancer 3 to be calculated from the number of revolutions of each pump or the length of time for which each pump has driven becomes equal to the above-mentioned predetermined amount. Otherwise, in a case where a predetermined amount of germination enhancer 3 is reserved in the germination enhancer reservoir 30, the germination enhancer supplying units 1000, 2000 may be controlled such that all the predetermined amount of germination enhancer 3 is supplied to the plants 10, 20. This makes it possible to control the germination enhancer supplying units 1000, 2000 such that the total amount of the germination enhancer 3 to be supplied to the plants 10, 20 becomes equal to the predetermined amount without using a sensor or the like for measuring an amount of germination enhancer 3 to be supplied thereto.

Instead, the control unit 40 may be configured to control the germination enhancer supplying units 1000, 2000 such that the total length of time for which the germination enhancer 3 is supplied to the plants 10, 20 becomes equal to a predetermined length of time. This control makes it possible to adjust the amount of supplied germination enhancer 3 at an appropriate level by using a timer 40A which is provided inside the control unit 40. In this case as well, the control unit 40 can control the germination enhancer supplying units 1000, 2000 such that the total amount of the germination enhancer 3 to be supplied to the plants 10, 20 becomes equal to the predetermined amount without using a sensor or the like.

Otherwise, the control unit 40 may control the germination enhancer supplying units 1000, 2000 such that a supply time for which the germination enhancer 3 is supplied to the plants 10, 20 and a non-supply time for which no germination enhancer 3 is supplied to the plants 10, 20 pass alternately. This control supplies the germination enhancer 3 to the subterranean parts 10b, 20b at intervals or with interruptions.

For example, the control unit 40 controls the germination enhancer supplying units 1000, 2000 such that the supply time of several minutes and the non-supply time of several minutes alternately pass. In this case, the appropriate setting of the supply time and the non-supply time makes it possible to prevent the germination enhancer 3 from being continuously supplied to the subterranean parts 10b, 20b of the plants 10, 20 when the germination enhancer 3 remains on the surfaces of the subterranean parts 10b, 20b. Thus, comparing with the case where the germination enhancer 3 is continuously supplied to the subterranean parts 10b, 20b, much smaller amount of the germination enhancer 3 can more efficiently exert the germination enhancing effect.

The hydroponic apparatus 100 includes a nutrient solution or water reservoir 50 and a nutrient solution or water supplying unit 3000. The nutrient solution or water reservoir 50 reserves the nutrient solution or water 5 for enhancing the growth of the plants 10, 20. The nutrient solution or water supplying unit 3000 supplies the nutrient solution or water 5 reserved in the nutrient solution or water reservoir 50 to the subterranean parts 10b, 20b. The nutrient solution or water supplying unit 3000 includes a pipe 51 connected to the nutrient solution or water reservoir 50 and the growing tanks 11, 21.

A pump P3 is provided to the middle of the pipe 51. A discharge port 16 is provided to a distal end of the pipe 51 which is located inside the growing tank 11. A discharge port 26 is provided to a portion of the pipe 51 which is located inside the growing tank 21. The pump P3 sends the nutrient solution or water 5 from the nutrient solution or water reservoir 50 to the discharge ports 16, 26 through the pipe 51. The nutrient solution or water 5 is discharged from the discharge ports 16, 26 to the subterranean parts 10b, 20b in the growing tanks 11, 21, respectively.

A nutrient solution or water drainpipe 1503 for draining the nutrient solution or water 5 out of the nutrient solution or water reservoir 50 is connected to the nutrient solution or water reservoir 50. The nutrient solution or water drainpipe 1503 is provided with a drain open/close valve 53 for selecting whether to drain the nutrient solution or water 5 out of the nutrient solution or water reservoir 50. A nutrient solution or water supplying pipe 1500 for supplying the nutrient solution or water 5 to the inside of the nutrient solution or water reservoir 50 is connected to the nutrient solution or water reservoir 50. A supply open/close valve 500 for selecting whether to supply the nutrient solution or water 5 to the nutrient solution or water reservoir 50 is connected to the nutrient solution or water reservoir 50.

The control unit 40 sends a control signal to the pump P3, the supply open/close valve 500, and the drain open/close valve 53. Thereby, the control unit 40 controls the rotary operation of the pump P3, as well as the open/close operations of the supply open/close valve 500 and the drain open/close valve 53.

After the germination enhancer supplying units 1000, 2000 finish supplying the germination enhancer 3 to the plants 10, 20, the control unit 40 controls the nutrient solution or water supplying unit 3000 so as to supply the nutrient solution or water 5 to the subterranean parts 10b, 20b from the nutrient solution or water reservoir 50.

To put it specifically, the control unit 40 drives the pump P3 for a predetermined length of time, and thereby sends the nutrient solution or water 5 through the pipe 51 from the inside of the nutrient solution or water reservoir 50 to the discharge ports 16, 26 inside the growing tanks 11, 21. By this, the nutrient solution or water 5 is discharged from the discharge ports 16, 26 to the subterranean parts 10b, 20b. The discharge ports 16, 26 have a structure for atomizing the nutrient solution or water 5, and thus spray the nutrient solution or water 5 onto the subterranean parts 10b, 20b. Thereby, the germination enhancer 3 remaining on the surfaces of the subterranean parts 10b, 20b can be rinsed off. This makes it possible to inhibit the unproductive growth of the plants 10, 20 which occurs due to the otherwise excessive supply of the germination enhancer 3.

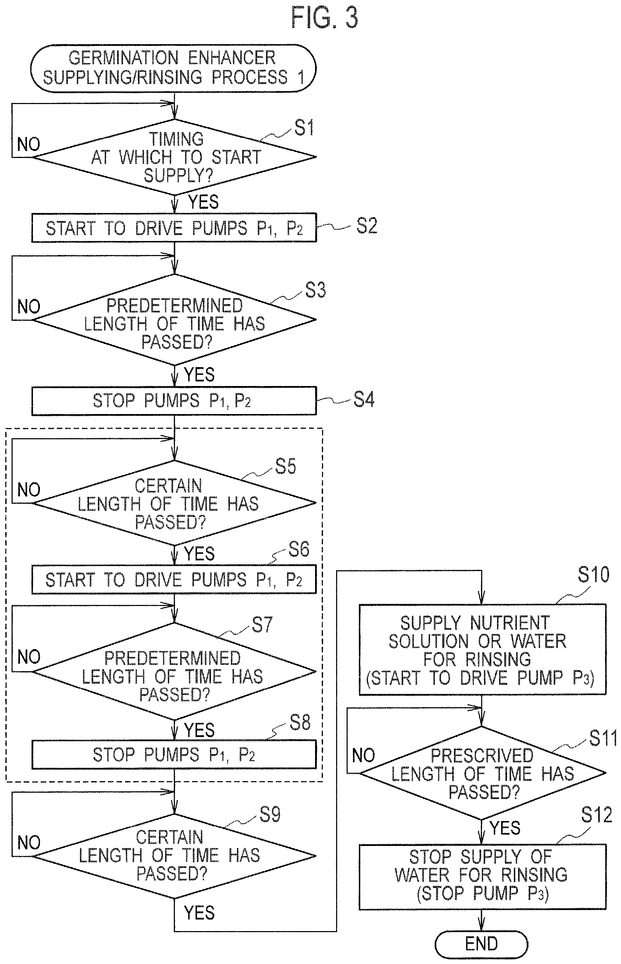

Next, using Fig. 3, descriptions will be provided for a germination enhancer supplying process 1 to be performed by the control unit 40 of the hydroponic apparatus 100 of Embodiment 1 of the present invention. In the germination enhancer supplying process 1, each determination is made based on whether a length of time measured by the timer 40A inside the control unit 40 becomes equal to a corresponding predetermined length of time.

In step S1, the control unit 40 determines whether the timing at which to supply the germination enhancer 3 to the plants 10, 20 has come. In a case where the control unit 40 determines in step S1 that the timing at which to supply the germination enhancer 3 to the plants 10, 20 has not come yet, the control unit 40 repeats the determination in step S1. On the other hand, in a case where the control unit 40 determines in step S1 that the timing at which to supply the germination enhancer 3 to the plants 10, 20 has come, the control unit 40 drives the pumps P1, P2 as the germination enhancer supplying units 1000, 2000 in step S2. Thereby, the same amount of germination enhancer 3 is supplied to the subterranean parts 10b, 20b of the plants 10, 20 at the same time. This makes it possible to synchronize the timing at which to supply the germination enhancer 3 to the subterranean part 10b and the timing at which to supply the germination enhancer 3 to the subterranean part 20b. For this reason, it is possible to reduce a variation in the timing at which the multiple plants 10, 20 germinate.

In step S3, the control unit 40 determines whether a predetermined length of time has passed since the start of the supply of the germination enhancer 3 to the subterranean parts 10b, 20b. In a case where the control unit 40 determines in step S3 that the predetermined length of time has not passed yet, the control unit 40 repeats the process in step S3. On the other hand, in a case where the control unit 40 determines in step S3 that the predetermined length of time has passed since the start of the supply of the germination enhancer 3 to the subterranean parts 10b, 20b, the control unit 40 stops driving the pumps P1, P2 in step S4. Thereby, the control unit 40 stops supplying the germination enhancer 3 to the subterranean parts 10b, 20b. Thus, the length of time for which the germination enhancer 3 is supplied to the subterranean part 10b and the length of time for which the germination enhancer 3 is supplied to the subterranean part 20b can be made equal to each other. In other words, the length of time for which the germination enhancer 3 is supplied to the plant 10 and the length of time for which the germination enhancer 3 is supplied to the plant 20 can be made equal to each other. Accordingly, the amount of germination enhancer 3 to be supplied to the plant 10 and the amount of germination enhancer 3 to be supplied to the plant 20 can be made equal to each other. By this, the germination enhancing effect on the plant 10 and the germination enhancing effect on the plant 20 can be made substantially the same.

In step S5, the control unit 40 determines whether a certain length of time has passed since the stop of the drives of the pumps P1, P2. In a case where the control unit 40 determines in step S5 that the certain length of time has not passed yet since the stop of the drives of the pumps P1, P2, the control unit 40 repeats the process in step S5. On the other hand, in a case where the control unit 40 determines in step S5 that the certain length of time has passed since the stop of the drives of the pumps P1, P2, the control unit 40 starts to drive the pumps P1, P2 in step S6. The certain length of time referred to in step S5 is a period between supplies of the germination enhancer 3, and during the period, the germination enhancer supplying units 1000, 2000 halt their operations. During the halt period, the germination enhancer 3, which attaches to the subterranean parts 10b, 20b gradually evaporates, or gradually drops to the nutrient solution or water 5. Thereby, the germination enhancer 3 is removed from the subterranean parts 10b, 20b. During the halt period, the germination enhancing effect remains. For this reason, the supply of the germination enhancer 3 is not resumed. This makes it possible to use the germination enhancer 3 effectively.

In step S7, the control unit 40 determines whether a predetermined length of time has passed since the control unit 40 starts to drive the pumps P1, P2 again. In a case where the control unit 40 determines in step S7 that the predetermined length of time has not passed yet since the control unit 40 starts to drive the pumps P1, P2 again, the control unit 40 repeats the process in step S7. On the other hand, in a case where the control unit 40 determines in step S7 that the predetermined length of time has passed since the control unit 40 starts to drive the pumps P1, P2 again, the control unit 40 stops driving the pumps P1, P2 in step S8. The predetermined length of time referred to in step S7 is a length of time for which to supply the germination enhancer 3 for the second time.

The processes in steps S5 to S8 are performed to set the halt time for which to halt the germination enhancer supplying units 1000, 2000. However, in a case where no such a halt time is needed, the processes in steps S5 to S8 do not have to be performed. Steps S5 to S8 represent an example where one halt time is set. However, two or more halt times may be set.

In step S9, the control unit 40 determines whether a certain length of time has passed since the control unit 40 stops driving the pumps P1, P2. In a case where the control unit 40 determines in step S9 that the certain length of time has not passed yet since the control unit 40 stops driving the pumps P1, P2, the control unit 40 repeats the process in step S9. On the other hand, in a case where the control unit 40 determines in step S9 that the certain length of time has passed since the control unit 40 stops driving the pumps P1, P2, the control unit 40 drives the pump P3 in step S10 so as to start to supply the nutrient solution or water 5 for the rinsing purpose. Thus, the germination enhancer 3 is rinsed off from the surfaces of the subterranean parts 10b, 20b with the nutrient solution or water 5. This inhibits the unproductive growth of the plants 10, 20 which occurs due to an otherwise excessive amount of germination enhancer 3 remaining on the surfaces of the subterranean parts 10b, 20b.

In step S11, the control unit 40 determines whether a prescribed length of time has passed since the control unit 40 starts to drive the pump P3. In a case where the control unit 40 determines in step S11 that the prescribed length of time has not passed yet since the control unit 40 starts to drive the pump P3, the control unit 40 repeats the process in step S11. On the other hand, in a case where the control unit 40 determines in step S11 that the prescribed length of time has passed since the control unit 40 starts to drive the pump P3, the control unit 40 stops driving the pump P3 in step S12. With this, all the processes for enhancing the germination and inhibiting the unproductive growth end.

In the embodiment, as described above, the process for rinsing the germination enhancer 3 remaining on the surfaces of the subterranean parts 10b, 20b is performed using the nutrient solution or water supplying unit 3000. Instead, however, the germination enhancer 3 remaining on the surfaces of the subterranean parts 10b, 20b may be rinsed off using the germination enhancer supplying units 1000, 2000 as discussed below.

The control unit 40 drives the pumps P1, P2 for a predetermined length of time to thereby supply all the germination enhancer 3 in the germination enhancer reservoir 30 to the subterranean parts 10b, 20b in the growing tanks 11, 12. However, in the case where the germination enhancer reservoir 30 is provided with a drainpipe and a drain open/close valve, the germination enhancer 3 remaining in the germination enhancer reservoir 30 may be drained to the drainpipe by opening the drain open/close valve. Thereafter, the supply open/close valve 300 provided to the nutrient solution or water supplying pipe 303 for supplying the nutrient solution or water to the germination enhancer reservoir 30 is opened. Thereby, the nutrient solution or water is supplied to the germination enhancer reservoir 30 through the nutrient solution or water supplying pipe 303.

Thereafter, control unit 40 drives the pumps P1, P2. Thereby, the nutrient solution or water 5 reserved in the germination enhancer reservoir 30 is sent to the discharge ports 15, 25 inside the growing tanks 11, 21 through the pipes 31, 32. By this, the nutrient solution or water 5 is discharged from the discharge ports 15, 25 to the plants 10, 20. Thus, by supplying the nutrient solution or water 5 to the plants 10, 20 using the germination enhancer supplying units 1000, 2000, the germination enhancer 3 remaining on the surfaces of the plants 10, 20 can be rinsed off. This also makes it possible to prevent the unproductive growth of the plants 10, 20 which occurs due to the otherwise excessive supply of the germination enhancer 3.

It should be noted that a specialized mechanism for rinsing off the germination enhancer 3 attaching to the plants 10, 20 may be provided in addition to the configuration which has been discussed in the embodiment.

### (Embodiment 2)

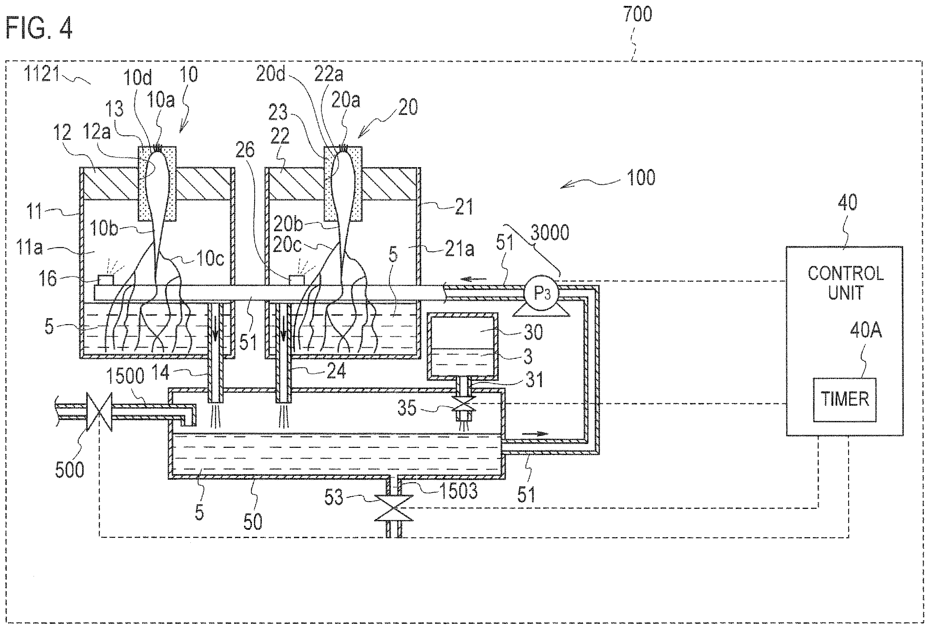

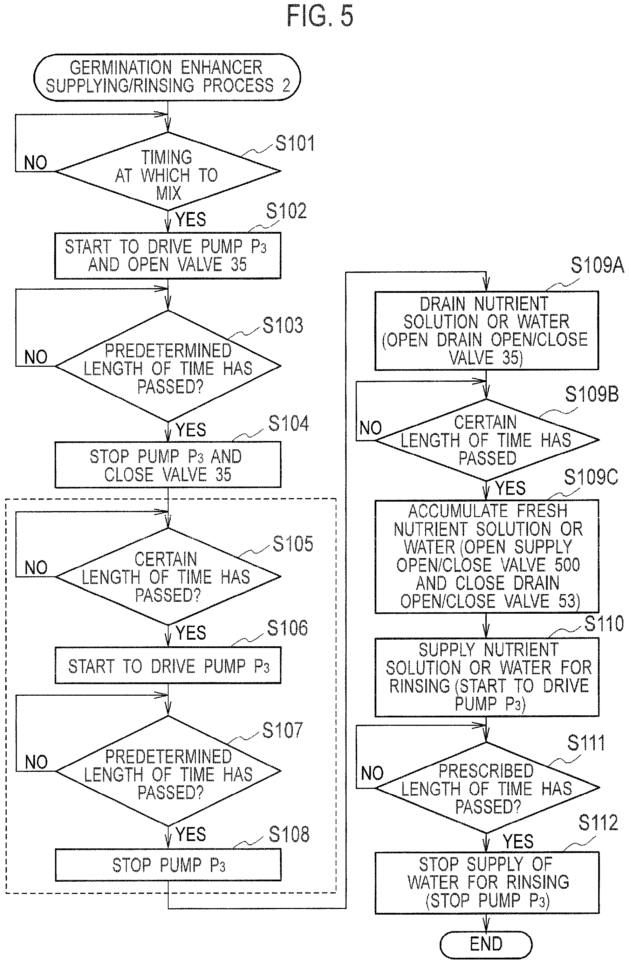

Using Figs. 4 and 5, descriptions will be provided for a hydroponic apparatus of Embodiment 2 of the present invention. The hydroponic apparatus 100 of Embodiment 2 has substantially the same configuration as the hydroponic apparatus 100 of Embodiment 1 does. For this reason, components of the hydroponic apparatus 100 of Embodiment 2 which are the same as those of the hydroponic apparatus 100 of Embodiment 1 will be denoted by the same reference signs. In Embodiment 2, duplicated descriptions for such components will be omitted unless otherwise necessary.

As shown in Fig. 4, in Embodiment 2 as well, the nutrient solution or water reservoir 50 reserves the nutrient solution or water 5 for enhancing the growth of the plants 10, 20. In the embodiment, a germination enhancer mixing unit 35 is provided to a lower end portion of the nutrient solution or water reservoir 50. The germination enhancer mixing unit 35 is an open/close valve, and is controlled by the control unit 40. Once the open/close valve serving as the germination enhancer mixing unit 35 is opened, the germination enhancer 3 inside the germination enhancer reservoir 30 drops to the nutrient solution or water 5 inside the nutrient solution or water reservoir 50 and is mixed into the nutrient solution or water 5. Instead of the open/close valve, a pump may be used as the germination enhancer mixing unit 35 to mix the germination enhancer 3 inside the germination enhancer reservoir 30 into the nutrient solution or water 5 inside the nutrient solution or water reservoir 50.

At a predetermined time, the germination enhancer mixing unit 35 mixes the germination enhancer 3 reserved in the germination enhancer reservoir 30 into the nutrient solution or water 5. Thereafter, the nutrient solution or water supplying unit 3000 supplies the nutrient solution or water 5 including the germination enhancer 3 to the subterranean parts 10b, 20b.

The control unit 40 controls a mode in which the germination enhancer mixing unit 35 mixes the germination enhancer 3 into the nutrient solution or water 5, and a mode of supplying the nutrient solution or water 5 including the germination enhancer 3 to the subterranean parts 10b, 20b.

The foregoing configuration of the hydroponic apparatus 100 of Embodiment 2 is different from that of the hydroponic apparatus 100 of Embodiment 1 in that the hydroponic apparatus 100 of Embodiment 2 does not include the germination enhancer supplying units 1000, 2000 of Embodiment 1.

The foregoing configuration likewise makes it possible to control the mode of supplying the nutrient solution or water 5 including the germination enhancer 3 for germinating the plants 10, 20 as lying dormant inside the hydroponic apparatus 100 to the subterranean parts 10b, 20b. To put it specifically, the control unit 40 is capable of controlling things such as the timing at which to supply the nutrient solution or water 5 including the germination enhancer 3, the length of time for which to supply the nutrient solution or water 5 including the germination enhancer 3, the interval at which to supply the nutrient solution or water 5 including the germination enhancer 3, and the amount of nutrient solution or water 5 including the germination enhancer 3 to be supplied. Accordingly, the breaking of the dormancy of the plants 10, 20 and the growing of the plants 10, 20 can be achieved in the same hydroponic apparatus 100.

In the embodiment, the germination enhancer reservoir 30 is fixed to the nutrient solution or water reservoir 50. Instead, however, the germination enhancer reservoir 30 reserving the germination enhancer 3 may have a structure for enabling the germination enhancer reservoir 30 to be attached to or detached from the nutrient solution or water reservoir 50.

In the embodiment, the control unit 40 controls the germination enhancer mixing unit 35 and the nutrient solution or water supplying unit 3000 such that the total amount of the nutrient solution or water 5 including the germination enhancer 3 to be supplied to the subterranean parts 10b, 20b becomes equal to a prescribed amount. Thereby, likewise, the germination enhancer 3 can be supplied to the subterranean parts 10b, 20b in amounts suitable to germinate the plants 10, 20. Accordingly, the hydroponic apparatus 100 of the embodiment can supply the nutrient solution or water 5 including the germination enhancer 3 to the subterranean parts 10b, 20b of the plants 10, 20 in such a way as to prevent the unproductive growth of the aerial parts 10d, 20d of the plants 10, 20 while enhancing their germination.

For example, the control unit 40 controls the amount of the germination enhancer 3, reserved in the germination enhancer reservoir 30, to be supplied to the nutrient solution or water 5 inside the nutrient solution or water reservoir 50. Thereby, the control unit 40 is capable of controlling the concentration of the germination enhancer 3 in the nutrient solution or water 5. Thus, the control unit 40 is capable of controlling the nutrient solution or water supplying unit 3000 and the germination enhancer mixing unit 35 such that the total amount of the nutrient solution or water 5 including the germination enhancer 3 with the predetermined concentration to be supplied to the plants 10, 20 becomes equal to the predetermined amount.

The control unit 40 may be configured to control the germination enhancer mixing unit 35 and the nutrient solution or water supplying unit 3000 such that the total length of time for which the nutrient solution or water 5 including the germination enhancer 3 is supplied to the subterranean parts 10b, 20b becomes equal to a prescribed length of time. In this case as well, the control unit 40 can adjust the amount of supplied germination enhancer 3 at an appropriate level by using the timer 40A provided inside the control unit 40, instead of using a sensor.

The control unit 40 controls the germination enhancer mixing unit 35 and the nutrient solution or water supplying unit 3000. Thus, a supply time for which the nutrient solution or water 5 including the germination enhancer 3 is supplied to the subterranean parts 10b, 20b and a non-supply time for which the nutrient solution or water 5 including the germination enhancer 3 is not supplied to the subterranean parts 10b, 20b pass alternately. Thereby, the germination enhancer 3 is supplied to the subterranean parts 10b, 20b at intervals or with interruptions. Accordingly, in this case, the appropriate setting of the supply time and the non-supply time makes it possible to prevent the germination enhancer 3 from being continuously supplied to the subterranean parts 10b, 20b of the plants 10, 20 when the germination enhancer 3 remains on the surfaces of the subterranean parts 10b, 20b. Thus, comparing with the case where the germination enhancer 3 is continuously supplied to the subterranean parts 10b, 20b, much smaller amount of the germination enhancer 3 can more efficiently exert the germination enhancing effect.

The hydroponic apparatus 100 includes the nutrient solution or water supplying pipe 1500, the supply open/close valve 500, the nutrient solution or water drainpipe 1503 and the drain open/close valve 53. The nutrient solution or water supplying pipe 1500 supplies the nutrient solution or water 5 to the nutrient solution or water reservoir 50. The supply open/close valve 500 is provided to the nutrient solution or water supplying pipe 1500. The nutrient solution or water drainpipe 1503 drains the nutrient solution or water 5 out of the nutrient solution or water reservoir 50. The drain open/close valve 53 is provided to the nutrient solution or water drainpipe 1503.

In the embodiment, once the nutrient solution or water supplying unit 3000 finishes supplying the nutrient solution or water 5 including the germination enhancer 3 to the subterranean parts 10b, 20b over the prescribed length of time, the control unit 40 opens the drain open/close valve 53. Thereby, the nutrient solution or water 5 including the germination enhancer 3 is drained out of the nutrient solution or water reservoir 50 to the nutrient solution or water drainpipe 1503. Thereafter, the control unit 40 closes the drain open/close valve 53 and opens the supply open/close valve 500 to supply the nutrient solution or water 5 including the germination enhancer 3 to the nutrient solution or water reservoir 50. Furthermore, the control unit 40 controls the nutrient solution or water supplying unit 3000 so as to supply the nutrient solution or water 5 from the nutrient solution or water reservoir 50 to the subterranean parts 10b, 20b.

The foregoing control makes it possible to rinse off the nutrient solution or water 5 including the germination enhancer 3, remaining on the surfaces of the subterranean parts 10b, 20b, with the nutrient solution or water 5 not including the germination enhancer 3. This makes it possible to prevent the unproductive growth of the plants 10, 20 which occurs due to the otherwise excessive supply of the germination enhancer 3.

In this embodiment as well, the media 13, 23 are configured to surround the outer peripheries of the germination parts 10a, 20a of the plants 10, 20, and to help the nutrient solution or water 5 including the germination enhancer 3 to attach to the germination parts 10a, 20a of the plants 10, 20. Thereby, the nutrient solution or water 5 including the germination enhancer 3 can be made to directly touch the germination parts 10a, 20a of the plants 10, 20. Thus, the germination enhancing effect can be exerted more securely.

Next, using Fig. 5, descriptions will be provided for a germination enhancer supplying process 2 to be performed by the control unit of the hydroponic apparatus of Embodiment 1 of the present invention. It should be noted that in the germination enhancer supplying process 2 as well, each determination is made based on whether a length of time measured by the timer 40A inside the control unit 40 becomes equal to a predetermined length of time.

In step S101, the control unit 40 determines whether the timing at which to mix the germination enhancer 3 into the nutrient solution or water 5 inside the nutrient solution or water reservoir 50 has come. In a case where the control unit 40 determines in step S101 that the timing at which to mix the germination enhancer 3 into the nutrient solution or water 5 inside the nutrient solution or water reservoir 50 has not come yet, the control unit 40 repeats the determination in step S1. On the other hand, in a case where the control unit 40 determines in step S101 that the timing at which to mix the germination enhancer 3 into the nutrient solution or water 5 inside the nutrient solution or water reservoir 50 has come, the control unit 40 opens the open/close valve as the germination enhancer mixing unit 35 in step S102. Thereby, the germination enhancer 3 drops from the germination enhancer reservoir 30 by its own weight, and is mixed into the nutrient solution or water 5 inside the nutrient solution or water reservoir 50. Furthermore, in step S102, the control unit 40 starts to drive the pump P3 as the nutrient solution or water supplying unit 3000. Thereby, the nutrient solution or water 5 including the germination enhancer 3 is supplied to the subterranean parts 10b, 20b of the plants 10, 20. This makes it possible to synchronize the timing at which to supply the germination enhancer 3 to the subterranean part 10b and the timing at which to supply the germination enhancer 3 to the subterranean part 20b. For this reason, it is possible to reduce a variation in the timing at which the multiple plants 10, 20 germinate.

In step S103, the control unit 40 determines whether a predetermined length of time has passed since the start of the supply of the nutrient solution or water 5 into which the germination enhancer 3 is mixed. In a case where the control unit 40 determines in step S103 that the predetermined length of time has not passed yet, the control unit 40 repeats the process in step S103. On the other hand, in a case where the control unit 40 determines in step S103 that the predetermined length of time has passed since the start of the supply of the germination enhancer 3, the control unit 40 stops driving the pump P3 in step S104. Thereby, the control unit 40 stops supplying the nutrient solution or water 5 including the germination enhancer 3 to the subterranean parts 10b, 20b. Accordingly, the length of time for which the nutrient solution or water 5 including the germination enhancer 3 is supplied to the subterranean part 10b and the length of time for which the nutrient solution or water 5 including the germination enhancer 3 is supplied to the subterranean part 20b can be made equal to each other. By this, the length of time for which the germination enhancer 3 is supplied to the plant 10 and the length of time for which the germination enhancer 3 is supplied to the plant 20 can be made equal to each other. Accordingly, in the embodiment, the amount of germination enhancer 3 to be supplied to the plant 10 and the amount of germination enhancer 3 to be supplied to the plant 20 can be made equal to each other. By this, the germination enhancing effect on the plant 10 and the germination enhancing effect on the plant 20 can be made substantially the same. Furthermore, in step S103, the control unit 40 closes the open/close valve as the germination enhancer mixing unit 35. Instead, however, the control unit 40 may close the open/close valve as the germination enhancer mixing unit 35 when all the germination enhancer 3 reserved in the germination enhancer reservoir 30 is supplied to the nutrient solution or water reservoir 50.

In step S105, the control unit 40 determines whether a certain length of time has passed since the stop of the drive of the pump P3. In a case where the control unit 40 determines in step S105 that the certain length of time has not passed yet since the stop of the drive of the pump P3, the control unit 40 repeats the process in step S105. On the other hand, in a case where the control unit 40 determines in step S105 that the certain length of time has passed since the stop of the drive of the pump P3, the control unit 40 starts to drive the pump P3 in step S106. The certain length of time referred to in step S105 is a period between supplies of the nutrient solution or water 5 including the germination enhancer 3, and during the period, the nutrient solution or water supplying unit 3000 halts its operations. During the halt period, the nutrient solution or water 5 including the germination enhancer 3, which attaches to the subterranean parts 10b, 20b, gradually evaporates, or gradually drops to the nutrient solution or water 5. Thereby, the germination enhancer 3 is removed from the subterranean parts 10b, 20b. During the halt period, the germination enhancing effect remains. For this reason, the supply of the germination enhancer 3 is not resumed. This makes it possible to use the germination enhancer 3 effectively.

In step S107, the control unit 40 determines whether a predetermined length of time has passed since the control unit 40 starts to drive the pump P3. In a case where the control unit 40 determines in step S107 that the predetermined length of time has not passed yet since the control unit 40 starts to drive the pump P3, the control unit 40 repeats the process in step S107. On the other hand, in a case where the control unit 40 determines in step S107 that the predetermined length of time has passed since the control unit 40 starts to drive the pump P3, the control unit 40 stops driving the pump P3 as the nutrient solution or water supplying unit 3000 in step S108. This predetermined length of time referred to in step S107 is a length of time for which to supply the germination enhancer 3 for the second time.

The processes in steps S105 to S108 are performed to set the halt time between the supplies of the nutrient solution or water 5 including the germination enhancer 3 to the subterranean parts 10b, 20b. In a case where no such a halt time is needed, the processes in steps S 105 to S 108 do not have to be performed. Steps S105 to S108 represent an example where one halt time is set. However, two or more halts times may be set.

After the control unit 40 stops driving the pump P3, in step S109A, the control unit 40 opens the drain open/close valve 53. Thereby, the nutrient solution or water 5 including the germination enhancer 3, which is reserved in the nutrient solution or water reservoir 50, is drained through the nutrient solution or water drainpipe 1503.

In step S109B, the control unit 40 determines whether a certain length of time has passed since the control unit 40 opens the drain open/close valve 53. In a case where the control unit 40 determines in step S109B that the certain length of time has not passed yet since the control unit 40 opens the drain open/close valve 53, the control unit 40 repeats the process in step S109B. On the other hand, in a case where the control unit 40 determines in step S109B that the certain length of time has passed since the control unit 40 opens the drain open/close valve 53, the control unit 40 closes the drain open/close valve 53 and opens the supply open/close valve 500 in step S109C. Thereby, fresh nutrient solution or water 5 flows into the nutrient solution or water reservoir 50 through the nutrient solution or water supplying pipe 1500, without allowing the nutrient solution or water 5 currently in the nutrient solution or water reservoir 50 to be drained to the nutrient solution or water drainpipe 1503. Thus, the fresh nutrient solution or water 5 is reserved in the nutrient solution or water reservoir 50. This fresh nutrient solution or water 5 is the nutrient solution or water 5 to be used for rinsing, which does not include the germination enhancer 3.

In step S110, the control unit 40 starts to drive the pump P3 to start to supply the nutrient solution or water 5 for rinsing. Thereby, the nutrient solution or water 5 is supplied to the subterranean parts 10b, 20b. Thus, the nutrient solution or water 5 including the germination enhancer 3, which remains on the surfaces of the subterranean parts 10b, 20b, is rinsed off with the nutrient solution or water 5 not including the germination enhancer 3. This inhibits the unproductive growth of the plants 10, 20 which occurs due to the otherwise excessive amount of germination enhancer 3 remaining on the surfaces of the subterranean parts 10b, 20b.

In step S111, the control unit 40 determines whether a prescribed length of time has passed since the control unit 40 starts to drive the pump P3. In a case where the control unit 40 determines in step S111 that the prescribed length of time has not passed yet since the control unit 40 starts to drive the pump P3, the control unit 40 repeats the process in step S111. On the other hand, in a case where the control unit 40 determines in step S111 that the prescribed length of time has passed since the control unit 40 starts to drive the pump P3, the control unit 40 stops driving the pump P3 in step S 112. With this, all the processes for enhancing the germination and inhibiting the unproductive growth end.

Descriptions will be hereinbelow provided for features of the hydroponic apparatuses 100 of the embodiments of the present invention; and effects obtainable from the features.
(1) Each hydroponic apparatus 100 includes the soil surface sections 12, 22, the growing tanks 11, 21, the germination enhancer supplying units 1000, 2000, and the control unit 40.
   The soil surface sections 12, 22 include the through-holes 12a, 22a through which to insert the plants 10, 20. The soil surface sections 12, 22 separate the subterranean spaces 11a, 21a where the subterranean parts 10b, 20b of the plants 10, 20 grow, and the aerial space 1121 where the aerial parts 10d, 20d of the plants 10, 20 grow.
   The growing tanks 11, 21, together with the soil surface sections 12, 22, form the subterranean spaces 11 a, 21 a, where the subterranean parts 10b, 20b are placed. The germination enhancer supplying units 1000, 2000 supply the germination enhancer 3, which is reserved in the germination enhancer reservoir 30, to at least either the aerial parts 10d, 20d or the subterranean parts 10b, 20b. The control unit 40 controls the mode in which the germination enhancer supplying units 1000, 2000 supply the germination enhancer 3 to the plants 10, 20.
   The foregoing configuration makes it possible to control the mode of supplying the germination enhancer 3 for germinating the plants 10, 20 as lying dormant inside the hydroponic apparatus 100 to the plants 10, 20. Accordingly, the breaking of the dormancy of the plants 10, 20 and the growing of the plants 10, 20 can be achieved in the same hydroponic apparatus 100.
(2) It is desirable that the control unit 40 controls the germination enhancer supplying unit 1000 such that the amount of germination enhancer 3 to be supplied to at least either the aerial parts 10d, 20d or the subterranean parts 10b, 20b becomes equal to the predetermined amount.
   This control makes it possible to supply the subterranean parts 10b, 20b with the germination enhancer 3 in amounts suitable to germinate the plants 10, 20. Thus, the germination enhancer 3 can be supplied to the subterranean parts 10b, 20b of the plants 10, 20 in such a way as to prevent the unproductive growth of the aerial parts 10d, 20d of the plants 10, 20 while enhancing the germination.
(3) It is desirable that the control unit 40 controls the germination enhancer supplying unit 1000 such that the total length of time for which the germination enhancer 3 is supplied to at least either the aerial parts 10d, 20d or the subterranean parts 10b, 20b becomes equal to the predetermined length of time.
   The foregoing configuration makes it possible to adjust the amount of supplied germination enhancer 3 at the appropriate level using the timer 40A provided within the control unit 40.
(4) It is desirable that the control unit 40 controls the germination enhancer supplying unit 1000 such that the supply time and the non-supply time pass alternately. In this respect, the supply time is the length of time for which to supply the germination enhancer 3 to at least either the aerial parts 10d, 20d or the subterranean parts 10b, 20b. The non-supply time is the length of time for which the germination enhancer 3 is supplied to neither the aerial parts 10d, 20d nor the subterranean parts 10b, 20b.
   The foregoing configuration supplies the germination enhancer 3 to the subterranean parts 10b, 20b at intervals or with interruptions. For example, the control unit 40 controls the germination enhancer supplying units 1000, 2000 such that the supply time of several minutes and the non-supply time of several minutes alternately pass. In this case, the appropriate setting of the supply time and the non-supply time makes it possible to prevent the germination enhancer 3 from being continuously supplied to the subterranean parts 10b, 20b of the plants 10, 20 when the germination enhancer 3 remains on the surfaces of the subterranean parts 10b, 20b. Thus, comparing with the case where the germination enhancer 3 is continuously supplied to the subterranean parts 10b, 20b, much smaller amount of the germination enhancer 3 can more efficiently exert the germination enhancing effect.
(5) It is desirable that the hydroponic apparatus 100 further includes the nutrient solution or water reservoir 50 and the nutrient solution or water supplying unit 3000. The nutrient solution or water reservoir 50 reserves the nutrient solution or water 5 for enhancing the growth of the plants 10, 20. The nutrient solution or water supplying unit 3000 supplies the nutrient solution or water 5 reserved in the nutrient solution or water reservoir 50 to the subterranean parts 10b, 20b. In the apparatus, it is desirable that the control unit 40 controls the nutrient solution or water supplying unit 3000 so as to start to supply the nutrient solution or water 5 to the subterranean parts 10b, 20b from the nutrient solution or water reservoir 50 within the predetermined length of time after the germination enhancer supplying unit 1000 finishes supplying the germination enhancer 3 to at least either the aerial parts 10d, 20d or the subterranean parts 10b, 20b.
   The foregoing configuration makes it possible to rinse off the germination enhancer 3 remaining on the surfaces of the subterranean parts 10b, 20b with the nutrient solution or water 5. This makes it possible to inhibit the unproductive growth of the plants 10, 20 which occurs due to the otherwise excessive supply of the germination enhancer 3.
(6) It is desirable that the hydroponic apparatus 100 further includes: the nutrient solution or water supplying pipe 303 for supplying the nutrient solution or water to the germination enhancer reservoir 30; and the supply open/close valve 300 provided to the nutrient solution or water supplying pipe 303. In the apparatus, it is desirable that the control unit 40 opens the supply open/close valve 300 so as to start to supply the nutrient solution or water to the germination enhancer reservoir 30 within the predetermined length of time after the germination enhancer supplying units 1000, 2000 finishes supplying the germination enhancer 3 to the subterranean parts 10b, 20b. It is desirable that, thereafter, the control unit 40 controls the germination enhancer supplying units 1000, 2000 so as to start supply the nutrient solution or water in the germination enhancer reservoir 30 to at least either the aerial parts 10d, 20d or the subterranean parts 10b, 20b.
   The foregoing configuration makes it possible to supply the nutrient solution or water to the plants 10, 20 using the germination enhancer supplying units 1000, 2000, and thereby to rinse off the germination enhancer 3 remaining on the surfaces of the subterranean parts 10b, 20b. This makes it possible to prevent the unproductive growth of the plants 10, 20 which occurs due to the otherwise excessive supply of the germination enhancer 3.
(7) It is desirable that the media 13, 23 have the flexibility and the water-holding property, as well as be provided between the plants 10, 20 and the through-holes 12a, 22a in such a way as to surround the plants 10, 20. It is desirable that the germination enhancer supplying units 1000 supply the germination enhancer 3 to the media 13, 23 such that the germination enhancer 3 permeates the media 13, 23 in the state where the plants 10, 20 are inserted through the through-holes 12a, 22a with the media 13, 23 interposed therebetween. It is desirable that the media 13, 23 be configured to surround the outer peripheries of the germination parts 10a, 20a of the plants 10, 20, and thereby to allow the germination enhancer 3 permeating the media 13, 23 to attach to the germination parts 10a, 20a of the plants 10, 20.
   The foregoing configuration enables the germination enhancer 3 to directly touch the germination parts 10a, 20a of the plants 10, 20. Thereby, the configuration makes it possible to exert the germination enhancing effect more securely.
(8) Each hydroponic apparatus 100 includes the soil surface sections 12, 22, the growing tanks 11, 21, the nutrient solution or water reservoir 50, the germination enhancer mixing unit 35, the nutrient solution or water supplying unit 3000, and the control unit 40.
   The soil surface sections 12, 22 include the through-holes 12a, 22a through which to insert the plants 10, 20. The soil surface sections 12, 22 separate the subterranean spaces 11a, 21 a where the subterranean parts 10b, 20b of the plants 10, 20 grow, and the aerial space 1121 where the aerial parts 10d, 20d of the plants 10, 20 grow. The growing tanks 11, 21, together with the soil surface sections 12, 22, form the subterranean spaces 11a, 21 a, where the subterranean parts 10b, 20b are placed. The nutrient solution or water reservoir 50 reserves the nutrient solution or water 5 for enhancing the growth of the plants 10, 20. The germination enhancer mixing unit 35 mixes the germination enhancer 3, reserved in the germination enhancer reservoir 30, into the nutrient solution or water 5. The nutrient solution or water supplying unit 3000 supplies the nutrient solution or water 5 including the germination enhancer 3 to the subterranean parts 10b, 20b. The control unit 40 controls the mode in which the germination enhancer mixing unit 35 mixes the germination enhancer 3 into the nutrient solution or water 5, and the mode in which the nutrient solution or water supplying unit 3000 supplies the nutrient solution or water 5 including the germination enhancer 3 to the subterranean parts 10b, 20b.
   The foregoing configuration makes it possible to control the mode of supplying the nutrient solution or water 5 including the germination enhancer 3 for germinating the plants 10, 20 as lying dormant inside the hydroponic apparatus 100 to the subterranean parts 10b, 20b. Accordingly, the breaking of the dormancy of the plants 10, 20 and the growing of the plants 10, 20 can be achieved in the same hydroponic apparatus 100.
(9) It is desirable that the control unit 40 controls the germination enhancer mixing unit 35 and the nutrient solution or water supplying unit 3000 such that the total amount of the nutrient solution or water 5 including the germination enhancer 3 to be supplied to the subterranean parts 10b, 20b becomes equal to the prescribed amount.
   The foregoing configuration makes it possible to supply the germination enhancer 3 to the subterranean parts 10b, 20b in amounts suitable to germinate the plants 10, 20. Thus, the germination enhancer 3 can be supplied to the subterranean parts 10b, 20b of the plants 10, 20 in such a way as to prevent unproductive growth of the aerial parts 10d, 20d of the plants 10, 20 while enhancing the germination.
(10) It is desirable that the control unit 40 controls the germination enhancer mixing unit 35 and the nutrient solution or water supplying unit 3000 such that the total length of time for which the nutrient solution or water 5 including the germination enhancer 3 is supplied to the subterranean parts 10b, 20b becomes equal to the prescribed length of time.
   The foregoing configuration makes it possible to adjust the amount of supplied germination enhancer 3 at the appropriate level using the timer 40A provided within the control unit 40, instead of using a sensor. This makes it possible to make the structure of the hydroponic apparatus 100 simpler.
(11) The control unit 40 controls the germination enhancer mixing unit 35 and the nutrient solution or water supplying unit 3000. Thus, it is desirable that the supply time for which the nutrient solution or water 5 including the germination enhancer 3 is supplied to the subterranean parts 10b, 20b and the non-supply time for which the nutrient solution or water 5 including the germination enhancer 3 is not supplied to the subterranean parts 10b, 20b pass alternately.
   The foregoing configuration supplies the germination enhancer 3 to the subterranean parts 10b, 20b at intervals or with interruptions. The appropriate setting of the supply time and the non-supply time makes it possible to prevent the germination enhancer 3 from being continuously supplied to the subterranean parts 10b, 20b of the plants 10, 20 when the germination enhancer 3 remains on the surfaces of the subterranean parts 10b, 20b. Thus, comparing with the case where the germination enhancer 3 is continuously supplied to the subterranean parts 10b, 20b, much smaller amount of the germination enhancer 3 can more efficiently exert the germination enhancing effect.
(12) The hydroponic apparatus 100 includes the nutrient solution or water supplying pipe 1500, the supply open/close valve 500, the nutrient solution or water drainpipe 1503, and the drain open/close valve 53. The nutrient solution or water supplying pipe 1500 supplies the nutrient solution or water 5 to the nutrient solution or water reservoir 50. The supply open/close valve 500 is provided to the nutrient solution or water supplying pipe 1500. The nutrient solution or water drainpipe 1503 drains the nutrient solution or water 5 out of the nutrient solution or water reservoir 50. The drain open/close valve 53 is provided to the nutrient solution or water drainpipe 1503. In the apparatus, the control unit 40 opens the drain open/close valve 53 once the nutrient solution or water supplying unit 3000 finishes supplying the nutrient solution or water 5 including the germination enhancer 3 to the subterranean parts 10b, 20b. Thereby, the nutrient solution or water 5 including the germination enhancer 3 is drained out of the nutrient solution or water reservoir 50 to the nutrient solution or water drainpipe 1503. Thereafter, the control unit 40 closes the drain open/close valve 53 and opens the supply open/close valve 500. Thereby, the nutrient solution or water 5 not including the germination enhancer 3 is reserved in the nutrient solution or water reservoir 50. After that, the control unit 40 controls the nutrient solution or water supplying unit 3000 such that the nutrient solution or water 5 not including the germination enhancer 3 is supplied to the subterranean parts 10b, 20b from the nutrient solution or water reservoir 50.
   The foregoing configuration makes it possible to rinse off the nutrient solution or water 5 including the germination enhancer 3, which remains on the surfaces of the subterranean parts 10b, 20b, with the nutrient solution or water not including the germination enhancer 3. This makes it possible to prevent the unproductive growth of the plants 10, 20 which occurs due to the otherwise excessive supply of the germination enhancer 3.
(13) It is desirable that the media 13, 23 have the flexibility and the water-holding property, as well as be provided between the plants 10, 20 and the through-holes 12a, 22a in such a way as to surround the plants 10, 20. The plants 10, 20 are inserted through the through-holes 12a, 22a with the media 13, 23 interposed therebetween. It is desirable that in this state, the nutrient solution or water supplying unit 3000 supplies the nutrient solution or water 5 including the germination enhancer 3 to the media 13, 23 such that the nutrient solution or water 5 including the germination enhancer 3 permeates the media 13, 23. It is desirable that the media 13, 23 be configured to surround the outer peripheries of the germination parts 10a, 20a of the plants 10, 20, and thereby to allow the nutrient solution or water 5 including the germination enhancer 3, which permeates the media 13, 23, to attach to the germination parts 10a, 20a of the plants 10, 20.

The foregoing configuration enables the nutrient solution or water 5 including the germination enhancer 3 to directly touch the germination parts 10a, 20a of the plants 10, 20. Thereby, the configuration makes it possible to exert the germination enhancing effect more securely.

This application claims the priority based on Japanese Patent Application No. 2014-260606, filed on December 24, 2014, the entire content of which is herein incorporated by reference.

### REFERENCE SIGNS LIST

- 3: germination enhancer
- 5: nutrient solution or water
- 10, 20: plant
- 10a, 20a: germination part
- 10b, 20b: subterranean part
- 10d, 20d: aerial part
- 11, 21: growing tank
- 11a, 21a: subterranean space
- 12, 22: soil surface section
- 12a, 22a: through-hole
- 13, 23: medium
- 30: germination enhancer reservoir
- 35: germination enhancer mixing unit
- 40: control unit
- 50: nutrient solution or water reservoir
- 53: drain open/close valve
- 300: supply open/close valve
- 303: nutrient solution or water supplying pipe
- 100: hydroponic apparatus
- 500: supply open/close valve
- 1000: germination enhancer supplying unit
- 1121: aerial space
- 1500: nutrient solution or water supplying pipe
- 1503: nutrient solution or water drainpipe
- 3000: nutrient solution or water supplying unit

## Claims

1. A hydroponic apparatus comprising:
a soil surface section including a through-hole through which to insert a plant, and separating a subterranean space where a subterranean part of the plant grows and an aerial space where an aerial part of the plant grows;
a growing tank, together with the soil surface section, forming the subterranean space, where the subterranean part is placed;
a germination enhancer supplying unit configured to supply a germination enhancer, reserved in a germination enhancer reservoir, to at least one of the aerial part and the subterranean part; and
a control unit configured to control a mode in which the germination enhancer supplying unit supplies the germination enhancer to the plant.

2. The hydroponic apparatus according to claim 1, wherein
the control unit controls the germination enhancer supplying unit such that a total amount of the germination enhancer to be supplied to at least one of the aerial part and the subterranean part becomes equal to a predetermined amount.

3. The hydroponic apparatus according to claim 1 or 2, wherein
the control unit controls the germination enhancer supplying unit such that a total length of time for which the germination enhancer is supplied to at least one of the aerial part and the subterranean part becomes equal to a predetermined length of time.

4. The hydroponic apparatus according to any one of claims 1 to 3, wherein
the control unit controls the germination enhancer supplying unit such that a supply time for which the germination enhancer is supplied to at least one of the aerial part and the subterranean part and a non-supply time for which the germination enhancer is supplied to neither the aerial part nor the subterranean part pass alternately.

5. The hydroponic apparatus according to any one of claims 1 to 4, further comprising:
a nutrient solution or water reservoir configured to reserve a nutrient solution or water for enhancing growth of the plant; and
a nutrient solution or water supplying unit configured to supply the nutrient solution or water, reserved in the nutrient solution or water reservoir, to the subterranean part, wherein
the control unit controls the nutrient solution or water supplying unit so as to supply the nutrient solution or water from the nutrient solution or water reservoir to the subterranean part within a predetermined length of time after the germination enhancer supplying unit finishes supplying the germination enhancer to at least one of the aerial part and the subterranean part.

6. The hydroponic apparatus according to any one of claims 1 to 4, further comprising:
a nutrient solution or water supplying pipe configured to supply a nutrient solution or water to the germination enhancer reservoir; and
a supply open/close valve provided to the nutrient solution or water supplying pipe, wherein
the control unit
opens the supply open/close valve so as to supply the nutrient solution or water to the germination enhancer reservoir within a predetermined length of time after the germination enhancer supplying unit finishes supplying the germination enhancer to the subterranean part, and thereafter
controls the germination enhancer supplying unit so as to start to supply the nutrient solution or water from the germination enhancer reservoir to at least one of the aerial part and the subterranean part.

7. The hydroponic apparatus according to any one of claims 1 to 6 further comprising:
a medium having flexibility and a water-holding property, and provided between the plant and the through-hole in such a way as to surround the plant, wherein
in a state where the plant is inserted through the through-hole with the medium interposed therebetween, the germination enhancer supplying unit supplies the germination enhancer to the medium such that the germination enhancer permeates the medium, and
the medium is configured to surround an outer periphery of a germination part of the plant, and allow the germination enhancer, permeating the medium, to attach to the germination part of the plant.

8. A hydroponic apparatus comprising:
a soil surface section including a through-hole through which to insert a plant, and separating a subterranean space where a subterranean part of the plant grows and an aerial space where an aerial part of the plant grows;
a growing tank, together with the soil surface section, forming the subterranean space, where the subterranean part is placed;
a nutrient solution or water reservoir configured to reserve a nutrient solution or water for enhancing growth of the plant;
a germination enhancer mixing unit configured to mix a germination enhancer, reserved in a germination enhancer reservoir, into the nutrient solution or water;
a nutrient solution or water supplying unit configured to supply the nutrient solution or water including the germination enhancer to the subterranean part; and
a control unit configured to control a mode in which the germination enhancer mixing unit mixes the germination enhancer into the nutrient solution or water as well as a mode in which the nutrient solution or water supplying unit supplies the nutrient solution or water including the germination enhancer to the subterranean part.

9. The hydroponic apparatus according to claim 8, wherein
the control unit controls the germination enhancer mixing unit and the nutrient solution or water supplying unit such that a total amount of the nutrient solution or water including the germination enhancer to be supplied to the subterranean part becomes equal to a prescribed amount.

10. The hydroponic apparatus according to claim 8 or 9, wherein
the control unit controls the germination enhancer mixing unit and the nutrient solution or water supplying unit such that a total length of time for which the nutrient solution or water including the germination enhancer is supplied to the subterranean part becomes equal to a prescribed length of time.

11. The hydroponic apparatus according to any one of claims 8 to 10, wherein
the control unit controls the germination enhancer mixing unit and the nutrient solution or water supplying unit such that a supply time for which the nutrient solution or water including the germination enhancer is supplied to the subterranean part and a non-supply time for which the nutrient solution or water including the germination enhancer is not supplied to the subterranean part pass alternately.

12. The hydroponic apparatus according to any one of claims 8 to 11, further comprising:
a nutrient solution or water supply pipe configured to supply the nutrient solution or water to the nutrient solution or water reservoir;
a supply open/close valve provided to the nutrient solution or water supply pipe;
a nutrient solution or water drainpipe configured to drain the nutrient solution or water out of the nutrient solution or water reservoir; and
a drain open/close valve provided to the nutrient solution or water drainpipe, wherein
once the nutrient solution or water supplying unit finishes supplying the nutrient solution or water including the germination enhancer to the subterranean part, the control unit opens the drain open/close valve so as to drain the nutrient solution or water including the germination enhancer out of the nutrient solution or water reservoir to the nutrient solution or water drainpipe,
thereafter, the control unit closes the drain open/close valve and opens the supply open/close valve such that the nutrient solution or water not including the germination enhancer is reserved in the nutrient solution or water reservoir, and
thereafter, the control unit controls the nutrient solution or water supplying unit so as to supply the nutrient solution or water not including the germination enhancer from the nutrient solution or water reservoir to the subterranean part.

13. The hydroponic apparatus according to any one of claims 8 to 12 further comprising:
a medium having flexibility and a water-holding property, and provided between the plant and the through-hole in such a way as to surround the plant, wherein
in a state where the plant is inserted through the through-hole with the medium interposed therebetween, the nutrient solution or water supplying unit supplies the nutrient solution or water including the germination enhancer to the medium such that the nutrient solution or water including the germination enhancer permeates the medium, and
the medium is configured to surround an outer periphery of a germination part of the plant, and allow the nutrient solution or water including the germination enhancer, permeating the medium, to attach to the germination part of the plant.
